# EUROPEAN PATENT APPLICATION

(11) **EP 0 926 109 A1**
(43) Date of publication of application: **30.06.1999**
(21) Application number: 98929791.6
(22) Date of filing: 01.07.1998
(51) Int. Cl.: C04B 35/565

(54) **SiC COMPOSITE AND METHOD OF PRODUCTION THEREOF**

(30) Priority: 02.07.1997 JP 21240597
(71) Applicant: NIPPON PILLAR PACKING CO., LTD., Osaka-shi, Osaka 532-0022 (JP)
(72) Inventor: TANINO, Kichiya-Nippon Pillar Packing Co., Ltd., Sanda-shi, Hyogo 669-1333 (JP); AKUNE, Yasuhiro-Nippon Pillar Packing Co., Ltd., Fukuchiyama-shi, Kyoto 620-0853 (JP)
(74) Representative: Fleuchaus, Leo, Dipl.-Ing.
(86) International application number: JP9802969
(87) International publication number: WO9901405

(57) **Abstract**

According to the present invention, SiC complex (M1) wherein a polycrystalline β-SiC layer (2) is grown on a surface of an α-SiC sintered base material (1) by thermal chemical vapor deposition performed at a temperature in a range of 1,300 to 1,650° C, is subjected to heat treatment at a temperature in a range of 1,850 to 2,000° C, thereby converting an atomic arrangement of Si and C constituting a polycrystal of the polycrystalline β-SiC layer (2) into an atomic arrangement of the α-SiC sintered base material (1), so that a crystal structure in a boundary layer between the both (1) and (2) has continuity by a single crystal grain, thereby making it easy to work a reflecting mirror having a super smooth mirror surface, and ensuring the smoothness for a long time.

## Description

### Technical Field

The present invention relates to SiC complex and a method of producing the same, and more particularly to SiC complex which is used as a reflecting mirror of a high luminance light such as a synchrotron radiation light, which is required to have a super smooth surface, and a method of producing the same.

### Background Art

Conventionally, as a SiC complex used for a reflecting mirror or the like of a high luminance light such as a synchrotron radiation light, the SiC complex wherein, SiC sintered material is employed as a base material and on the surface of the SiC sintered base material, SiC thin film is grown by thermal chemical vapor deposition (hereinafter referred to as thermal CVD) has been well known.

However, in the above SiC complex, the SiC thin film grown on the surface of the SiC sintered base material by thermal CVD is hard and fragile, and tensile stress in a direction of a surface remains on the SiC thin film. Therefore, in abrasively cutting the surface of the SiC complex in order to obtain a mirror surface of a super smooth surface having a good flatness, cracks easily occur on the hard and fragile SiC film. The depth of the clack sometimes reaches a boundary surface between it and the SiC sintered base material. Once the crack occurs, it is completely impossible to recover a predetermined flat surface by abrasively cutting. Even in case that the crack does not occur, it is difficult to resolve waves formed on the surface of the SiC thin film, whereby it is extremely difficult to work the mirror surface and it requires huge time and precious working to obtain the mirror surface having the predetermined flatness and smoothness. This causes a problem of incurring an extreme increase of production cost.

Furthermore, the SiC sintered material is employed as a base material, in which SiC grains are joined. The surface of the SiC sintered base material comprises crystal grains whose orientations are different from each other. On the other hand, the SiC film grown by thermal CVD is columnar, and has different orientations of the crystals so that the crystals grow from crystal nuclei originally generated, wherein the SiC film has a crystal structure clearly different from the surface of the SiC sintered base material. Thus, in the conventional SiC complex wherein, on the interface having an unstable and mismatching crystal structure, the SiC sintered base material only comes in contact with the SiC film, deformation remains on a boundary layer therebetween, and in processing after abrasively cutting or the like, and applying high energy such as the high luminance light, the stress is concentrated on the boundary layer, thereby making it easy to cause destroy and separation. Additionally, there have been problems wherein it is difficult to resolve the wave of the mirror surface, the deformation on the boundary layer is increased by applying the high energy, thus making it impossible to achieve performance required as the reflecting mirror.

### Disclosure of the Invention

The present invention has been conducted in view of the above mentioned circumstances and problems in the conventional technique. The object of the present invention is to provide SiC complex which removes deformation remaining owing to mismatch of a crystal structure in an interface between a SiC base material and a SiC film, and stress concentration in applying high energy, thereby facilitating working a mirror surface having an enough flatness and a super smoothness, and keeping the mirror surface in a state of a predetermined flatness, and a method of producing the same.

In the SiC complex according to a first invention, the SiC complex in which a polycrystalline layer consisting of Si and C atoms is disposed on a surface of a SiC sintered base material by thermal chemical vapor deposition, characterized in that the SiC complex is subjected to heat treatment, thereby converting a part of or all atomic arrangement of Si and C constituting a polycrystal of the polycrystalline layer into an atomic arrangement of the SiC sintered base material, so that a crystal structure in a boundary layer between the both has continuity by a single crystal grain.

According to the first invention having such a configuration, the SiC complex comprising the SiC sintered base material and the polycrystalline layer formed thereon by thermal CVD, is subjected to heat treatment, whereby, as the result of growth of the crystal grains constructing the SiC sintered base material, the atomic arrangement of Si and C constructing the polycrystal of the polycrystalline layer is converted into that of the SiC sintered base material, thereby making the crystal grains in the boundary layer between the both equal to those of the SiC sintered base material integrally grown on the surface of the polycrystalline layer or in the vicinity thereof. Consequently, this can provide a mechanically and chemically stable SiC complex wherein the interface disappears, and deformation remaining owing to the mismatch of the crystal structure is removed. Therefore, even if a super smooth mirror surface having enough flatness is worked, it can be easily worked without causing cracks, and the production cost can be extremely decreased. Moreover, as effects of the present invention, even if high energy of the high brightness-light or the like in working it or its practical use is given, there is neither stress concentration applied to the boundary layer, nor increase of deformation owing thereto, thereby making it possible to keep high efficiency of beam reflection i.e., high performance of the production (mirror surface) for a long time.

In the method of producing the SiC complex according to the second invention, a method of producing SiC complex comprising the steps of:
disposing a polycrystalline layer comprising Si and C atoms on a surface of a SiC sintered base material by thermal chemical vapor deposition,
subjecting the SiC complex to heat treatment, and
converting a part of or all atomic arrangement of Si and C constructing a polycrystal of the polycrystalline layer into an atomic arrangement of the SiC sintered base material, so that a crystal structure in a boundary layer between the both of the SiC sintered base material and the polycrystalline layer has continuity by a single crystal grain.

Also, the second invention having such an arrangement can facilitate production of the SiC complex having a mechanically and chemically stable continuous structure according to the first invention. In the production thereof, the remaining stress between the SiC sintered base material and the polycrystalline layer is removed, thereby attaining improvement of the production quality, as an effect thereof.

In the SiC complex according to the first invention and the method of producing the SiC complex according to the second invention, the polycrystalline layer constructing the complex is the polycrystalline β-SiC layer grown on the surface of the SiC sintered base material by thermal chemical vapor deposition. In case that thermal CVD temperature applied to the polycrystalline β-SiC layer is set to be in a range of 1,300 to 1,650 °C, it prevents impure atoms of the SiC sintered base material from diffusing in the continuous crystal structure, thereby obtaining the SiC complex having the continuous structure owing to the high quality-single crystal grains having less impurities and defects than the SiC sintered base material so that the atomic arrangement of Si and C of the polycrystal of the polycrystalline β-SiC layer is converted into that of the SiC sintered base material so as to grow as a continuous crystal structure.

In the method of producing the SiC complex according to the second invention, heat treatment applied to the SiC complex is performed at a higher temperature than that of thermal CVD in the polycrystalline β-SiC layer and in an atmosphere of a saturated SiC vapor pressure, thus improving the quality of the single crystal grains as a structure continuous to the SiC sintered base material.

### Brief Description of the Drawings

FIG. 1 is a diagram illustrating a state of a SiC complex according to the present invention before the SiC complex is heat-treated.
FIG. 2A is a diagrammatically enlarged sectional view of a main portion of the SiC complex before the SiC complex is heat-treated.
FIG. 2B is an actual sectional view of a main portion of the SiC complex before the SiC complex is heat-treated.
FIG. 3A is a diagrammatically enlarged sectional view of a main portion of the SiC complex after the SiC complex is heat-treated.
FIG. 3B is an actual sectional view of a main portion of the SiC complex after the SiC complex is heat-treated.

### Best Modes for Carrying Out the Invention

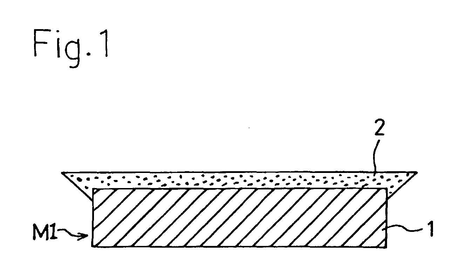

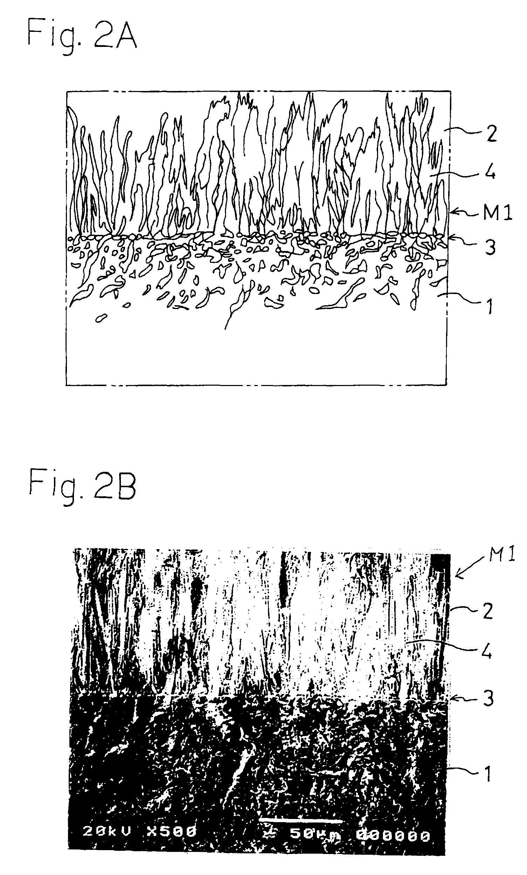

Hereinafter, an embodiment of the invention will be described with reference to the drawings. FIG. 1 is a diagram illustrating a SiC complex M1 prior to being subjected to heat treatment. The complex M1 is formed by growing a polycrystalline cubic β-SiC layer 2 on a surface of a single crystal hexagonal α-SiC base material 1 (6H type or 4H type) by thermal chemical vapor deposition (hereinafter referred to as thermal CVD) at a temperature in a range of 1300 to 1650 °C. In a step of growing the polycrystalline β-SiC layer 2, as clearly shown in FIG. 2A diagrammatically illustrating an enlarged view of a main portion and FIG. 2B illustrating an etched section in a microphotograph, on the surface of an α -SiC sintered base material 1 including a lattice defect, each polycrystal 4 of the polycrystalline β-SiC layer 2, having the substantially same orientation as those of the others is grown, thereby contacting to each other on the surfaces of different crystal forms and presenting a clear interface 3 in a substantially linear state.

Thereafter, a whole of the complex M1 of the SiC is subjected to heat treatment at a temperature in a range of 1,850 to 2,000 °C, preferably, 1,900°C, and the heat treatment of the SiC complex is performed in an atmosphere of a saturated SiC vapor pressure whereby an atomic arrangement of Si and C constituting the polycrystal 4 of the polycrystalline β-SiC layer 2 is converted into the atomic arrangement of the α-SiC sintered base material 1, and is orientated to the same direction as an axis of crystal of the α-SiC sintered base material 1, thereby being integrated with a single crystal grain of the sintered base material 1. Consequently, a large single crystal 5 is continuously grown from a boundary layer between the α-SiC sintered base material 1 and the polycrystalline β -SiC layer 2 to the surface of the β-SiC layer 2 or the vicinity thereof, and a crystal structure is joined by the single crystal α-SiC grains, so as to make the boundary layer disappear with the result that the SiC complex M is produced as a finished production.

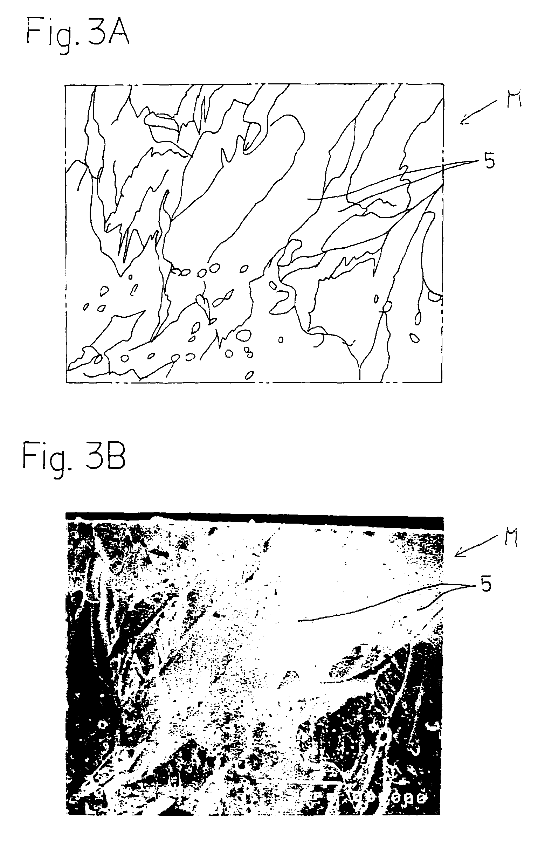

As mentioned above, the SiC complex M1 wherein the polycrystal 4 of the β-SiC layer 2 is grown by thermal CVD on the surface of α-SiC sintered base material 1, is subjected to heat treatment, whereby crystal growth mainly consisting of solid-phase growth, such as that lattice vibration occurs in the interface 3 prior to being subjected to heat treatment to change the atomic arrangement is generated. As shown in FIG. 3A illustrating enlarged diagrammatically sectional view of the main portion, and FIG. 3B illustrating an etched section in a microphotograph, the same crystal grain as that on a side of the SiC sintered base material 1 is integrally grown to the surface of the polycrystalline β-SiC layer 2 or the vicinity thereof, thus extinguishing a portion on which crystal grain boundaries formed as a boundary face between it and the SiC sintered base material 1 are concentrated. This can provide the SiC complex M having a continuous structure of the single crystal α-SiC grain which is mechanically and chemically stable without causing any winding or deformation owing to mismatch of the crystal structure on the interface 3.

According to the SiC complex M produced in this manner, when the surface is precisely ground, the crystal structure is predetermined and continuous, whereby neither occurrence of cracks nor destroy and separation owing to stress concentration on the boundary layer are accompanied, thereby making it possible to facilitate working the mirror surface so as to make the surface flat and super smooth. Even if high energy of high brightness-light or the like in practical use is given, there is no increase of deformation owing to stress concentration applied to the boundary layer, thereby making it possible to keep high efficiency of beam reflection, i.e., high performance of the production (mirror surface) for a long time.

As a condition of the heat treatment applied to the SiC complex M1, most preferably, the temperature is in a range of 1,850 to 2,000 °C, a period of time for the treatment is 1 to 3 hours. If the temperature for the heat treatment is lower than 1850 °C, a great number of SiCs constituting the interface cannot be provided with kinetic energy of atom being close to theoretically decomposing energy of SiC. Moreover, in case that the temperature is higher than 2,000 °C, it is provided with thermal energy extremely surpassing the decomposing energy of SiC. Also from portions except the boundary layer, the atomic arrangement of Si and C constituting the β-SiC layer 2 is converted into the atomic arrangement of α-SiC, whereby there is a fear of forming a boundary layer on which new crystal boundaries are concentrated, as well as another fear wherein the SiC crystal in itself is decomposed.

Furthermore, as the SiC sintered base material, the α -SiC sintered base material 1 is employed in the above embodiment. Alternatively, for example, a β-SiC sintered body or the like may be employed. As a polycrystalline layer, the polycrystalline β-SiC layer 2 grown on the surface of the α -SiC sintered base material 1 by thermal CVD is employed in the above embodiment. Alternatively, for example, a polycrystalline α-SiC layer, a SiC sintered body having high purity and an amorphous plate having high purity (equal to or lower than 10 ^{14atm} / cm³) may be employed. Thus, the high quality-SiC complex in the same way as the embodiment can be obtained.

In addition, as the single crystal α-SiC base material 1 in the above embodiment, either 6H type or 4H type may be employed. In using 6H type, the single α-SiC crystal to which converting the polycrystals of the polycrystalline β-SiC layer 2 is converted by means of the heat treatment has the same form as the 6H type single crystal so as to be easily grown. Moreover, when the 4H type-single crystal base material 1 is employed, the single crystal having the same form as that of the 4H type-single crystal is easily converted to be grown by means of the heat treatment.

### Industrial Applicability

As mentioned above, the present invention relates to a technique as below. The complex wherein the polycrystalline layer consisting of Si and C atoms is formed on the surface of the SiC crystal base material by thermal CVD, is subjected to the heat treatment, whereby the atomic arrangement of Si and C constituting the polycrystal of the polycrystalline layer is converted into that of the SiC sintered base material. This makes it a continuous structure by means of the single crystal grain, wherein a structure of the boundary layer is mechanically and chemically stable, with the result that the present invention can prevent occurrence of deformation and stress concentration in applying the high energy in practical use thereof, and facilitate working a high efficient production (reflecting mirror) having a super smooth mirror face, and keep its smoothness for a long time.

## Claims

1. SiC complex in which a polycrystalline layer consisting of Si and C atoms is disposed on a surface of a SiC sintered base material by thermal chemical vapor deposition, characterized in that the SiC complex is subjected to heat treatment, thereby converting a part of or all atomic arrangement of Si and C constituting a polycrystal of the polycrystalline layer into an atomic arrangement of the SiC sintered base material, so that a crystal structure in a boundary layer between the both of the SiC sintered base material and the polycrystalline layer has continuity by a single crystal grain.

2. SiC complex according to claim 1, wherein the SiC sintered base material constructing the SiC complex is an α-SiC sintered base material.

3. SiC complex according to claim 1, wherein the polycrystalline layer constructing the SiC complex is a polycrystalline β-SiC layer grown on the surface of SiC sintered base material by thermal chemical vapor deposition.

4. SiC complex according to claim 1, wherein the SiC complex is subjected to heat treatment at a temperature in a range of 1,850 to 2,000° C.

5. SiC complex according to claim 3, wherein the polycrystalline β-SiC layer is grown on the surface of the SiC sintered base material by thermal chemical vapor deposition performed at a temperature in a range of 1,300 to 1,650° C.

6. A method of producing SiC complex comprising the steps of:
disposing a polycrystalline layer consisting of Si and C atoms on a surface of a SiC sintered base material by thermal chemical vapor deposition,
subjecting the SiC complex to heat treatment, and
converting a part of or all atomic arrangement of Si and C constituting a polycrystal of the polycrystalline layer into an atomic arrangement of the SiC sintered base material, so that a crystal structure in a boundary layer between the both of the SiC sintered base material and the polycrystalline layer has continuity by a single crystal grain.

7. A method of producing SiC complex according to claim 6, wherein, as the SiC sintered base material constructing the SiC complex, an α-SiC sintered base material is employed.

8. A method of producing SiC complex according to claim 6, wherein, as the polycrystalline layer constructing the SiC complex, a polycrystalline β-SiC layer grown on the surface of the SiC sintered base material by thermal chemical vapor deposition.

9. A method of producing SiC complex according to claim 7, wherein the SiC complex is subjected to heat treatment at a temperature in a range of 1,850 to 2,000° C.

10. SiC complex according to claim 8, wherein the polycrystalline β-SiC layer is grown on the surface of the SiC sintered base material by thermal chemical vapor deposition performed at a temperature in a range of 1,300 to 1,650° C, during growing the film, the temperature of heat treatment of the SiC complex is higher than that of the thermal chemical vapor deposition, and the heat treatment of the SiC complex is performed in an atmosphere of a saturated SiC vapor pressure.
